Europäisches Patentamt

European Patent Office

Office européen des brevets

(19)

(11) Publication number: **0 072 806**
**B1**

# EUROPEAN PATENT SPECIFICATION

(12)

(45) Date of publication of patent specification: **05.11.86**

(51) Int. Cl.⁴: **B 01 D 46/10,** F 15 D 1/02

(21) Application number: **81903182.4**

(22) Date of filing: **09.11.81**

(86) International application number:
**PCT/US81/01504**

(87) International publication number:
**WO 82/01667 27.05.82 Gazette 82/14**

(54) CONDENSATE REMOVAL DEVICE FOR STEAM LINES AND THE LIKE.

(30) Priority: **17.11.80 US 207802**

(43) Date of publication of application:
**02.03.83 Bulletin 83/09**

(45) Publication of the grant of the patent:
**05.11.86 Bulletin 86/45**

(84) Designated Contracting States:
**DE FR LU NL**

(56) References cited:
**DE-C- 810 509**
**DE-C- 838 295**
**GB-A- 432 033**
**SU-A- 394 590**
**US-A-2 790 463**
**US-A-3 018 799**
**US-A-3 894 562**
**US-A-4 171 209**
**US-A-4 232 711**

(73) Proprietor: **ENGINEERING RESOURCES, LTD.**
**8550 West Bryn Mawr Avenue**
**CHicago Illinois 60631 (US)**

(72) Inventor: **STAVROPOULOS, Constantine, N.**
**4 N. 150 Woodale**
**Addison, IL 60101 (US)**

(74) Representative: **Nettleton, John Victor et al**
**Abel & Imray Northumberland House 303-306**
**High Holborn**
**London, WC1V 7LH (GB)**

## Description

This invention relates to liquid drainage devices for fluid conduit systems. More particularly, this invention relates to devices for removing condensate from steam lines.

Steam piping systems must be provided with equipment to remove the condensate which accumulates as heat is lost from the steam. Generally, condensate removal equipment is located at low points or pockets in the steam piping and at regular intervals in the extended runs of the steam piping, as well as at steam-driven equipment which could be damaged by condensate. Older equipment, such as the widely employed inverted bucket condensate trap, has increasingly been replaced with more simplified orifice devices, for example, those devices described in United States Patents 3,715,870 and 3,877,895, in which a plate having an orifice is positioned in steam lines enabling condensate to be forced through the small diameter orifice by the high pressure steam; when the orifice is properly sized, condensate obstructs passage of steam through the orifice in order to minimize steam loss while permitting drainage of the condensate.

United States Patent 4,171,209, describes a device in which an orifice plate is unitarily formed in the body of a fitting which can be conveniently connected directly into the steam line, preferably downstream from a conventional Y-strainer which removes particulate debris from the accumulated condensate. While such unitarily formed orifice plate devices have been effective and proven to be commercially successful, the drilling of the small orifice required is a difficult process, and because the resulting fitting has an orifice of fixed length and diameter, a multiplicity of variously drilled bodies of fittings are employed to accommodate variation in steam pressures in order to minimize steam loss through the orifice.

GB—A—432 033 discloses a steam trap in the form of a cylindrical body having a channel comprising a funnel-shaped inlet section, a short narrow section, a long tapering section, a short cylindrical section of a diameter larger than that of all the other sections, and an outlet section. The connection of a number of the channels in series and also in parallel is also disclosed, an arrangement with a pair of such cylindrical bodies in series arranged side-by-side with another such pair being illustrated.

DE—C—838 295 discloses a steam condensate drainage device comprising a drainage nozzle with a through passageway. The passageway comprises a construction followed by a cylindrical passage, the cylindrical passage leading in turn to a flared section widening only very gradually. In an alternative construction, the cylindrical passage follows a short conical flared portion rather than following the constriction directly. The drainage nozzle is shown fitted in a housing for connection to external pipes.

DE—C—810 509 discloses a steam condensate drainage device the body of which accommodates a normally-closed drainage valve and a drainage tube arranged in parallel with the valve. The tube has a flanged mouth against which a filter element is pressed by a threaded bushing. The tube is shown as having a simple cylindrical bore for the whole of its length except for the exit end where there is a bevel.

US—A—2 790 463 discloses a flow regulator for the water in a drinking fountain. The flow regulator comprises a cylindrical body having an inlet end and an outlet end, external threads being formed on the body adjacent the inlet end and adjacent the outlet end. The body has at its inlet end an inwardly tapering conical bore and a first axial bore having a relatively narrow diameter extends axially inwardly from the inner end of the conical bore. A second axial bore having a somewhat greater diameter is joined to the first axial bore by means of a conical bore. A third axial bore having a diameter somewhat larger than the second axial bore is joined thereto by means of a conical bore. A fourth axial bore having a diameter somewhat greater than that of the third axial bore is joined thereto by means of a conical bore. The outlet end of the body is chamfered into the fourth axial bore.

The present invention provides a device for drainage of condensate from a steam system without passage of live steam, the device consisting of a body structure and at least two tubular nozzles, wherein:

(a) the body structure has a fluid flow conduit therethrough and includes a generally cylindrical bore formed within said body structure;

(b) the tubular nozzles are each independently receivable within said bore, each has an external configuration suitable for frictional mounting within said bore, and each has an internal constricted passageway (34a) but the internal constricted passageways of the nozzles are different in configuration from each other in order to enable variation in the constricted passageways suitable for operation with different steam pressures and condensate drainage in said steam system;

(c) said conduit includes a conical entrance opening outwardly from said bore; and

(d) each tubular nozzle includes a terminal flange for engaging said conical entrance.

Interchangeable tubular nozzle structures provide variation in diameter and length of the constriction which can be employed with a given size bore for service in a range of steam pressures.

The invention enables provision of a standardized body for a constriction device having a standardized bore configuration so that the nozzle structure can be made available as separate items for convenient installation within the standardized bore in accordance with nozzle dimension requirements for proper drainage.

## Brief Description of the Drawings

Figure 1 illustrates a steam condensate removal line including an embodiment of the flow constriction device according to this invention;

Figure 2 is a side elevation view of the constriction device shown in Figure 1, with partial cross-section showing an inserted tubular nozzle structure;

Figure 3 is an end view of the device shown in Figure 2 having the tubular nozzle structure removed;

Figure 4 is a side elevation view of a modified embodiment of a constriction device according to this invention with partial cross-section showing modifications in the flow conduit;

Figure 5 is a side elevation of the constriction device shown in Figure 2, with partial cross-section showing the tubular nozzle structure removed;

Figure 6 is an enlarged cross-sectional view of the tubular nozzle structure shown in Figure 2;

Figure 7 is a side elevation view of a modified constriction device according to this invention, with partial cross-section showing a replaceable bore housing;

Figure 8a—8d are cross-sectional side views of tubular nozzle structures according to this invention, showing modifications of dimensions of portions of the flow constriction;

Figure 9 is a side elevation view of a modified embodiment of the constriction device according to this invention with partial cross-section showing a modified tubular nozzle structure and a filter element arrangement;

Figure 10 is an enlarged cross-sectional view of the filter element arrangement shown in Figure 9;

Figure 11 is an enlarged, cross-sectional side view of the tubular nozzle structure shown in Figure 9.

## Description of the Preferred Embodiments

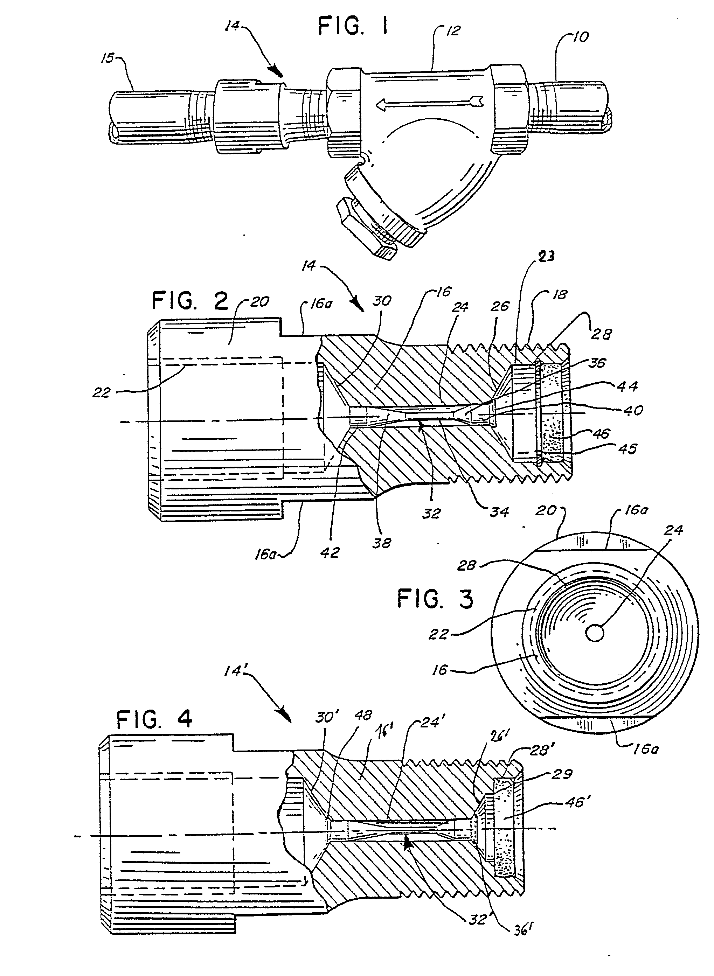

Referring to the condensate removal line as shown in Figure 1, a mixture of condensate liquid and some steam is directed under generally high pressure from pipe 10 into a conventional Y-strainer device 12 from right to left as indicated by the direction of the arrow. The strainer unit within Y-strainer 12 filters the condensed liquid to remove debris particles entrained in the mixture, prior to flow of the mixture into an embodiment of the constriction device of this invention, generally designated by reference character 14, which is threaded into the left-hand outlet of Y-strainer 12. Condensate is forced through constriction device 14, as described hereinafter, and drained through condensate return line 15 typically for delivery to a steam boiler (not shown).

Referring to Figure 2, constriction device 14 includes a generally cylindrical body 16 having an externally threaded male end 18, and having a preferably integrally formed female end 20 housing a threaded socket 22. Male end 18 is designed for preferably threading directly into Y-strainer 12, and female end 20 is designed to receive condensate return line 15, as shown in Figure 1.

The body 16 has a fluid flow conduit generally designated 23 therethrough and houses a preferably coaxially aligned and generally cylindrical bore 24. Bore 24 preferably has a conically formed entrance 26 leading to a generally cylindrical passage 28 forming a somewhat recessed opening in male end 18 of the embodiment shown in Figure 2. A preferably conically formed exit formation 30 from bore 24 leads to socket 22. Removably inserted within bore 24 is a generally elongate tubular nozzle structure, designated by general reference character 32 in Figure 2.

As shown in Figure 2, nozzle structure 32 has the general configuration of a venturi tube with a substantially cylindrical vena contracta or constricted passageway 34 joined between converging entrance formation 26 and diverging exit formation 28. Cylindrical inlet 40 and outlet 42 joining entrance 26 and exit 30, respectively, are substantially equal in outer diameter to the diameter of cylindrical bore 24 and can allow frictional press fit of nozzle structure 32 within bore 24. Preferably, inlet formation 40 is provided with an outward flange 44 which engages conical entrance 26 to properly position the insertion of nozzle structure 32 within bore 24. Riveting of flange 44 against conical entrance 26 can be employed to further secure such insertion.

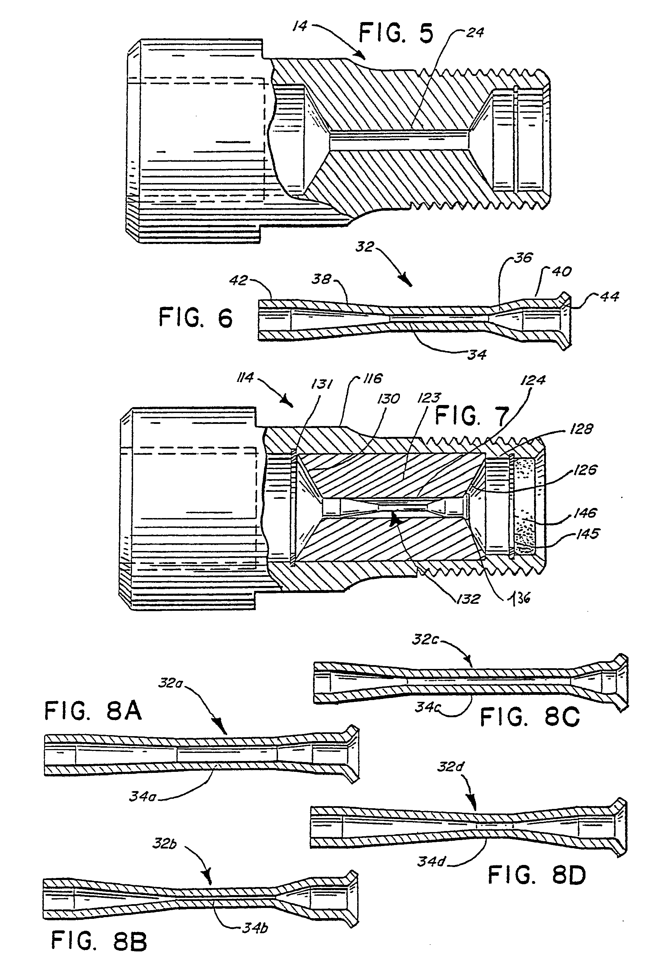

The insertion of nozzle structure 32 into bore 24 allows the drilling of bore 24 to a conveniently large diameter without the difficulty of sizing the bore diameter to the required dimension of the condensate constriction; thus, the nozzle structure 32 can be separately fabricated and then inserted to provide a vena contracta of desired diameter and length to serve as the condensate constriction in a variety of sizes suitable for service under a range of steam pressures with a single bore diameter. Suitably, vena contracta 34 can be fabricated with inner diameter in the range of approximately 0.2—0.9 of the diameter of bore 24, so that substitution of various nozzle structures can allow convenient reduction in the diameter of vena contracta 34 for service under increasing steam pressure. In addition the vena contracta can be conveniently fabricated in a range of lengths as shown in the nozzle structures 32 and 32a—32d drawn enlarged in Figures 6 and 8a—8d.

Again referring to Figure 2, cylindrical passage 28 can be circumferentially grooved to receive a retaining ring 45 for a filter element 46 to remove any debris particles which have passed through Y-strainer 12 and prevent plugging of nozzle device 32. Alternatively, as shown in Figure 4, cylindrical passage 28' can be provided with a shoulder 29 providing a seat for filter element 46'. Additionally, as shown in Figure 4, nozzle structure 32' can be provided with a flange 48 which engages conical exit formation 30'.

Figures 3 and 5 show end and side views, respectively, of nozzle device 14 shown in Figure 2 with tubular nozzle structure 32 removed from bore 24. Figure 3 also shows the opposing flat seats 16a formed in the surface of body 16 for engagement by a wrench.

Referring to Figure 7, modified nozzle device 114 is shown with body 116 provided with a removable bore housing 123 for bore 124. Body 116 is circumferentially grooved to receive a retaining ring 131 for engageably positioning conically formed exit formation 130 on bore housing 123, leading from bore 124. Similarly, a removably annular passage 128 engages a conical entrance formation 126 on bore housing 123. Body 116 is circumferentially grooved on receive retainer ring 145 which is engaged between annular passage 128 and a filter element 146. A tubular nozzle structure 132, having configuration similar to nozzle structure 32 shown in Figures 2 and 6, is removably inserted within bore 124. Removable bore housing 123 allows even greater flexibility in design because a range in the diameter of bore 124 can be conveniently employed with a single body 116.

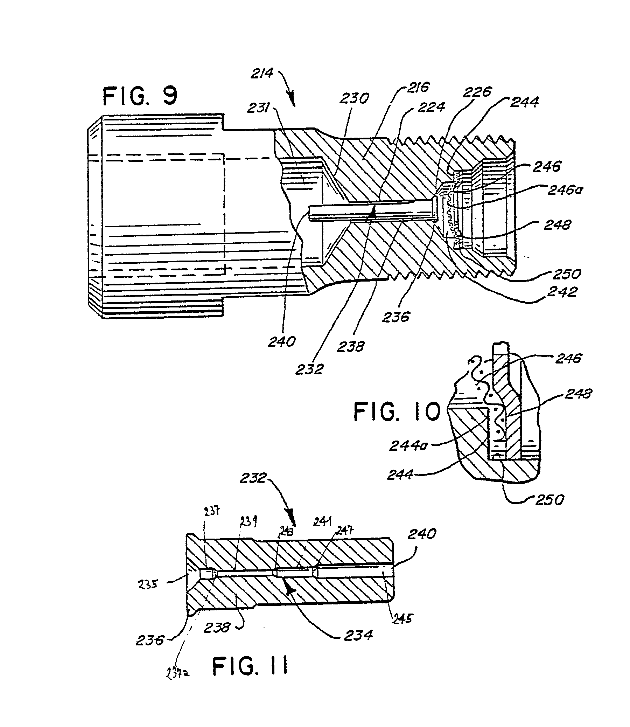

In a modified embodiment shown in Figure 9, constriction device 214 includes body 216 in which bore 224 has conical entrance 226 and exit 230 formations. In this embodiment, tubular nozzle structure 232 rearwardly projects from bore 224; as shown in Figure 9, nozzle structure 232 can extend entirely through the conical exit formation 230 from bore 224 to a point within the cylindrical exit passage 231 from body 216. The rearward projection of the inserted nozzle device 232 from bore 224 permits greater extension of the length of the constriction 234 shown in Figure 11, completely independent of the length of the bore 224, as shown in Figure 9. Thus, the extended length of constriction 234 permits increased restriction in the flow of condensate with a reduction in the passage of escaping steam, commonly expressed as the ratio of the rate of discharge for liquid mass to the rate of discharge for vapor mass. While the length of small diameter orifices which are drilled in the prior art devices is restricted, typically to a maximum of approximately 0.250 inch, (0.635 cm) the insertable tubular nozzle structure of this invention enables easier fabrication of the flow constriction as well as convenient variation in both the diameter and length of the flow constriction employed, with the added practical advantage of a single bore diameter.

Referring now to Figure 9, nozzle structure 232 includes an outwardly flanged entrance formation 236 on the tubular body 238; flange formation 236 engages the conically formed bore entrance 226 for positioning the insertion of nozzle structure 232 within bore 224. Preferably, at least a portion of tubular body 238 adjoining flange entrance 236 has an outer diameter approximately equal to the diameter of bore 224 to provide a frictional press fit upon the insertion of nozzle structure 232 within bore 224. As best shown in Figure 11, flow constriction 234 provided in nozzle structure 232 is tapered in the configuration of a modified venturi tube. The constricted passageway, generally designated by reference character 234, includes an inwardly converging conical inlet 235 adjacent to flange formation 236. Inlet 235 converges to a short cylindrical formation 237 which leads to a second converging conical formation 237a which converges to a first generally elongate cylindrical constriction 239. A second generally cylindrical constriction 241 is coaxially aligned endwise with constriction 239 and constriction 241 has a somewhat larger diameter as illustrated in Figure 11. A truncate conical bore 243 joins constriction 239 with constriction 241. A third cylindrical constriction 245 is coaxially aligned endwise and has a somewhat larger diameter than constriction 241. A second truncate conical bore 247 joins constriction 245 with constriction 241. The axial alignment of constrictions 239, 241 and 245 forms a sequence in the order of increasing relative diameter of the cylindrical constrictions, and bores 243 and 247 provide gradual transition between the respective constrictions.

A substantially cylindrical constriction can also be employed in the tubular nozzle structure of this invention. Most preferably, the terminus 240 of constriction 234 is positioned in rearward projection from bore 224 as described with reference to Figure 9.

Referring again to Figure 9, a cylindrical passage 242 leading to conical bore entrance 226 can be provided with an annular shoulder 244 having an annular corner 244a. A generally circular filter member 246 can be positioned adjacent the shoulder 244; the central portion 246a of filter element 246 can be inwardly bent toward bore 224 and secured by a similarly bent annular retainer ring 248, which pinches filter member 246 against corner 244a as best shown in Figure 10. Filter member 246 is positioned upstream from nozzle structure 232 in order to remove debris from condensate prior to its passage through nozzle structure 232 within constriction 234. The retainer ring 248 is of suitable diameter to frictionally engage against the inner circumference 250 for sealing function.

**Claims**

1. A device (14, 14', 114, 214) for drainage of condensate from a steam system without passage of live steam, the device (14, 14', 114, 214) consisting of a body structure (16, 16', 116, 216) and at least two tubular nozzles (32 a—d, 32', 132, 232), wherein:

(a) the body structure (16, 216) has a fluid flow conduit (23) therethrough and includes a generally cylindrical bore (24, 24', 124, 224) formed within said body structure (16, 216);

(b) the tubular nozzles are each independently receivable within said bore (24, 24', 124', 224), each has an external configuration suitable for frictional mounting within said bore, and each has an internal constricted passageway (34a) but the internal constricted passageways (34a) of the nozzles (32a—d, 32', 132, 232) are different in configuration from each other in order to enable variation in the constricted passageways suitable for operation with different steam pressures and condensate drainage in said steam system;

(c) said conduit includes a conical entrance (26, 226) opening outwardly from said bore (24, 224); and

(d) each tubular nozzle (32a—d, 32', 132, 232) includes a terminal flange (36, 36', 136, 236) for engaging said conical entrance (26, 226).

2. A device (14, 214) as claimed in claim 1, wherein at least one tubular nozzle (232) includes at least two generally coaxial and cylindrical constrictions (239, 241) formed within said passageway (234), the second (241) of said constrictions having a somewhat larger diameter than the diameter of the first (239) of said constrictions, said nozzle (232) further including a first generally truncate conical bore (243) joining said constructions (239, 241).

3. A device (14, 214) as claimed in claim 2, wherein said tubular nozzle (232) further includes a third generally coaxial cylindrical constriction (245) having a diameter somewhat larger than the diameters of said first and second constrictions (239, 241), said third cylindrical constriction (245) communicated with the larger diameter of said constructions (241) through a second truncate conical bore (247) joined therebetween, the axial alignment of said cylindrical constructions (239, 241, 245) being in sequential order of increased relative diameter.

4. A device (14, 214) as claimed in claim 1, 2 or 3, wherein said body structure (16, 216) includes an exit formation (30, 230) at the opposite end from said entrance (26, 226) to said bore (24, 224) and wherein said tubular nozzle (32, 232) projects from said bore (24, 224) into said exit formation (30, 230).

## Revendications

1. Dispositif (14, 14', 114, 214) pour le drainage d'un condensat d'un réseau de vapeur sans le passage de vapeur vive, le dispositif (14, 14', 114, 214) consistant en une structure de corps (16, 16', 116, 216) et au moins deux ajutages tubulaires (32a—d, 32', 132, 232), où:

(a) la structure de corps (16, 216) est traversée d'un conduit d'écoulement de fluide (23) et comprend un alésage généralement cylindrique (24, 24', 124, 224) formé dans ladite structure de corps (16, 216);

(b) chacun des ajutages tubulaires peut être indépendamment reçu dans ledit alésage (24, 24', 124', 224) chacun a une configuration externe appropriée à un montage à friction dans ledit alésage et chacun a un passage rétréci interne (34a) mais les passages rétrécis internes (34a) des ajutages (32a—d, 32', 132, 232) sont de configuration différente les uns des autres afin de permettre une variation des passages rétrécis appropriée à un fonctionnement à différentes pressions de vapeur et purge du condensat dans ledit réseau de vapeur;

(c) ledit conduit comprend une entrée conique (26, 226) débouchant vers l'extérieur dudit alésage (24, 224); et

(d) chaque ajutage tubulaire (32a—d, 32', 132, 232) comprend un bourrelet terminal (36, 36', 136, 236) pour engager ladite entrée conique (26, 226).

2. Dispositif (14, 214) selon la revendication 1 où au moins un ajutage tubulaire (232) comprend au moins deux rétrécissements généralement coaxiaux et cylindriques (239, 241) formés dans ledit passage (234), le second (241) desdits rétrécissements ayant un diamètre un peu plus grand que le diamètre du premier (239) desdits rétrécissements, ledit ajutage (232) comprenant de plus un premier alésage conique généralement tronqué (243) joignant lesdits rétrécissements (239, 241).

3. Dispositif (14, 214) selon la revendication 2 où ledit ajutage tubulaire (232) contient de plus un troisième rétrécissement cylindrique généralement coaxial (245) dont le diamètre est un peu plus grand que les diamètres des premier et second rétrécissements (239, 241), ledit troisième rétrécissement cylindrique (245) communiquant avec le plus grand diamètre desdits rétrécissements (241) par un second alésage conique tronqué (247) joint entre eux, l'alignement axial desdits rétrécissements cylindriques (239, 241, 245) étant en ordere séquentiel de diamètre relatif accru.

4. Dispositif (14, 214) selon la revendication 1, 2 ou 3 où ladite structure de corps (16, 216) comprend une formation de sortie (30, 230) à l'extrémité opposée de ladite entrée (26, 226) audit alésage (24, 224) et où ledit ajutage tubulaire (32, 232) fait saillie dudit alésage (24, 224) dans ladite formation de sortie (30, 230).

## Patentansprüche

1. Vorrichtung (14, 14', 114, 214) zum Abziehen von Kondensat aus einem Dampfsystem ohne Zufuhr von Frischdampf, wobei die Vorrichtung (14, 14', 114, 214) aus einem Körper (16, 16', 116, 216) und mindestens zwei rohrförmigen Düsen (32a—d, 32', 132, 232) besteht, dadurch gekennzeichnet, daß

(a) der Körper (16, 216) einen durch diesen hindurchgehenden Strömungskanal (23) sowie eine im wesentlichen zylindrische Bohrung (24, 24', 124, 224) aufweist;

(b) die rohrförmigen Düsen jeweils unabhängig voneinander in der Bohrung (24, 24', 124', 224) aufnehmbar sind, jede von diesen eine äußere Konfiguration aufweist, welche sich für eine reibschlüssige Anordnung in der Bohrung eignet, und jede von diesen einen inneren verengten Durchgang (34a) aufweist, wobei jedoch die inneren verengten Durchgänge (34a) der Düsen (32a—d, 32', 132, 232) in der Konfiguration unterschiedlich sind, um ein Variieren dieser verengten Durchgänge im Hinblick auf ein Arbeiten mit unterschiedlichen Dampfdrücken und ein Abziehen von Kondensat in dem Dampfsystem zu ermöglichen;

(c) der Kanal einen sich von der Bohrung (24, 224) nach außen öffnenden konischen Einlaß (26, 226) aufweist und daß

(d) jede der rohrförmigen Düsen (32a—d, 32', 132, 232) einen Endflansch (36, 36', 136, 236) für den Eingriff mit dem konischen Einlaß (26, 226) aufweist.

2. Vorrichtung (14, 214) nach Anspruch 1, dadurch gekennzeichnet, daß mindestens eine rohrförmige Düse (232) mindestens zwei im wesentlichen koaxiale und zylindrische Verengungen (239, 241) in dem Durchgang (234) aufweist, wobei die zweite (241) der Verengungen einen etwas größeren Durchmesser aufweist als die erste (239) dieser Verengungen und die Düse (232) weiter eine erste im wesentlichen kegelstumpfförmige Bohrung (243) aufweist, welche die Konstruktionen (239, 241) miteinander verbindet.

3. Vorrichtung (14, 214) nach Anspruch 2, dadurch gekennzeichnet, daß die rohrförmige Düse (232) ferner eine dritte im wesentlichen koaxiale zylindrische Verengung (245) mit einem Durchmesser aufweist, der etwas größer ist als die Durchmesser der ersten und zweiten Verengungen (239, 241), wobei die dritte zylindrische Verengung (245) mit dem größeren Durchmesser der Konstruktionen (241) über eine zweite kegelstumpfförmige Bohrung (247) zwischen diesen in Verbindung steht und die axiale Ausrichtung der zylindrischen Konstruktionen (239, 241, 245) in der Reihenfolge der in bezug aufeinander zunehmenden Durchmesser erfolgt.

4. Vorrichtung (14, 214) nach Anspruch 1, 2 oder 3, dadurch gekennzeichnet, daß der Körper (16, 216) einen Auslaß (30, 230) am dem Einlaß (26, 226) zu der Bohrung (24, 224) gegenüberliegenden Ende aufweist und daß die rohrförmige Düse (32, 232) sich von der Bohrung (24, 224) in in Auslaß (30, 230) erstreckt.

0 072 806

FIG. 1

FIG. 2

FIG. 3

FIG. 4

1.

FIG. 5

FIG. 6

FIG. 7

FIG. 8A

FIG. 8B

FIG. 8C

FIG. 8D

2

0 072 806

FIG. 9

FIG. 10

FIG. 11

3